Europäisches Patentamt

European Patent Office

Office européen des brevets

(11) Publication number: **0 288 987 B1**

(12) # EUROPEAN PATENT SPECIFICATION

(45) Date of publication of patent specification: **04.03.92**  (51) Int. Cl.⁵: **B60C  9/20**

(21) Application number: **88106722.7**

(22) Date of filing: **27.04.88**

(54) **Improvements in the reinforcing armouring of tyres for vehicle wheels.**

(30) Priority: **28.04.87 IT 2029287**

(43) Date of publication of application:
**02.11.88 Bulletin  88/44**

(45) Publication of the grant of the patent:
**04.03.92 Bulletin  92/10**

(84) Designated Contracting States:
**AT BE DE ES FR GB GR LU NL SE**

(56) References cited:
**GB-A- 2 009 270      GB-A- 2 015 937**
**GB-A- 2 061 202      GB-A- 2 064 445**
**GB-A- 2 070 526      US-A- 4 169 495**

(73) Proprietor: **PIRELLI COORDINAMENTO
PNEUMATICI Società per Azioni
Piazzale Cadorna, 5
I-20123 Milan(IT)**

(72) Inventor: **Tavazza, Giuseppe
Via Senatore 14
Milan(IT)**
Inventor: **Maiocchi, Luigi
Via Mazzini 1
Vernate Fraz. Moncucco (Milan)(IT)**

(74) Representative: **Giannesi, Pier Giovanni et al
Pirelli S.p.A. Direzione Brevetti Piazzale
Cadorna, 5
I-20123 Milano(IT)**

Rank Xerox (UK) Business Services

## Description

The present invention relates to tyres for vehicle wheels and precisely tyres of radial type, that is those provided by a carcass wherein the reinforcing cords of said carcass lie on radial planes, containing the tyre axis, extending from a tyre-bead to another.

This type of tyre comprises also a circumferential, reinforcing armouring, generally known as breaker, disposed upon the tyre and interposed between the tread-band and the carcass of said tyre.

As well known, the breaker structure preponderantly affect both the behaviour characteristics of the tyre during working conditions and its own lifetime, particularly on rate and regularity of wear of the tread-band.

More specifically, the invention relates to those breaker structures particularly adopted in tyres having high capacity of loading, comprising at least two layers of metallic cords radially overlapped, axially extending along almost all the tread-band width, at each extremity provided with a further reinforcing ring, radially and outwardly disposed in respect to the lower layers, constituted by one or more strips of textile cords or metallic cords having high elongation, circumferentially oriented, that is parallelly to the equatorial plane of the tyre.

The reasons for which the cords of the reinforcing lateral strips must be of high elongation type, that is more extensible than those utilized to reinforce the layers, are different and very well known to the technicians: on the other hand, the main reason to which all others can be connected is that the lesser modulus (greater extensibility) of the cords of the strips must compensate their better efficiency in supporting the circumferential tensile stresses, said efficiency being due to their direction, also circumferential, in respect to the cords of the layers, which are, however, transversally oriented, that is inclined in respect to the circumferential direction of the tyre.

In conclusion, by using high modulus cords for the layers and low modulus cords in the strips, can be realized breaker layers and strips globally having modulus of elasticity of the same order of size one another and they however originate omogeneous breaker structures which allow, first of all, the moulding of the raw tyre and that substantially and evenly resist to the stresses condition to which tyres are subjected under working.

It is known that, to obtain a satisfactory behaviour of the tyre during driving, it must be provided, on the cross-section, with a profile, in correspondence of the tread-band, at least slightly curved whilst, to have a good regularity of wear of the tread-band, said profile must be considerably flat, thus originating a contact area more rectangular than elliptical.

The regularity of wear and the low abradibility have acquired, by the passing of time, a considerable importance for two reasons, the first one being the possibility of keeping low the costs, and the second one is due to the fact that the technical progress achieved in the vehicles, and the improved condition of the roads make that an uneven wear strongly affect the behaviour of the tyre during driving, thus causing vibrations and continouos deviations from the given direction.

The fulfilment of such a requirement is, on the other hand, in great contrast with the behaviour of the tyre during working: in other words, in respect to the present values, a further improvement as to wear regularity can be achieved only by a greater flattening of the tyre profile, but this measure causes a considerable loss of sensibility, which is rather important as to the driving characteristics (a steering prompt reply and directional stability) which are, however, guaranteed thanks to the swelling of the tread-band.

The Applicant has now discovered that is possible to overcome this point of clear discrepancy improving at the same time both the cited characteristics without falling down in none of the connected drawbacks, so that the task of the present invention is to get a new breaker-structure in tyres for vehicle wheels, of the type comprising at least two layers of metallic fabric, radially overlapped and at least a further reinforcing strip, radially disposed at each outer extremity of said couple of layers, capable to improve the structure resistancy, the wear regularity and the kilometrical yield of the tread-band, as well as the behaviour characteristics of the tyre during working.

A known tyre according to the preamble of claim 1 is shown, e.g. in GB-A-2 061 202.

The object of the present invention is, however, a tyre for vehicle wheels comprising a radial carcass, a tread-band upon such a carcass and a breaker structure between the tread-band and the carcass, said breaker structure comprising at least two layers of metallic fabric, radially overlapped, having a width substantially like that of the tread-band, reinforced by cords having an elongation at break comprised between 2,6% and 3,2%, said cords being parallelly disposed together in each layer and crossed with those at the opposite layer, symmetrically inclined in respect to the tyre longitudinal direction, according to an angle comprised between 10° and 30°, and a couple of reinforcing rings, each ring being disposed at the extremity of said breaker structure, in a radial outer position in respect to said couple of layers, of width comprised between 7% and 40% of the axial width of said breaker structure, each ring comprising at least a strip of rubberized fabric, being this latter reinforced by cords disposed according to the circumferential direction of the tyre, having an elongation at break of value greater than that of the reinforcing cords of said layers radially innermost, characterized by the fact that in the vulcanized tyre, said strip reinforcing cords have at least two distinct values of modulus of elongation, whereby the cords having a greater modulus of elongation are disposed in the axially outermost portion of said strips such that the modulus of elongation of said reinforcing cords does not increase when proceeding axially from the outside towards the inside of said strips.

In a suitable embodiment of the invention, said strips comprise two groups of reinforcing cords, being the modulus of said cords approximately equal one another in each group and substantially different from those of the flanked group.

To realize said characteristic, the cords of the outer group are conveniently lang lay metallic cords, of High Elongation type. In combination with these, the cords of the inner group can be metallic cords of Very High Elongation type or Hybrid textile cords comprising one or more Aramide yarns.

In particular, said Hybrid textile cords can comprise two yarns in Aramide and one in Polyammide, helicoidally twisted together, said Aramide yarns presenting a remaining torsion not exceeding 0,5 turns per inch, said yarn in Polyamide presenting a remaining torsion in opposite direction in respect to that of the yarns in Aramide not inferior to 1,5 turns per inch.

According to a convenient embodiment of the invention, the axial width of the outer group is comprised between 30% and 70% of the total width of the strip.

As far as the assembling of the rings are concerned, these can comprise even more radially overlapped strips; besides, the cords of at least one group of each strip can be distributed in a plurality of radially overlapped bands.

Finally, it has been found convenient that the axially outer edge of said strips substantially coincide with the axially outer edge of the narrower of the two layers in radially inner position.

Anyway, the present invention will be still better understood from the following detailed description offered solely by way of non-limiting example, and referring to the figures of the accompanying drawing wherein:

- figure 1 shows, in cross section, the breaker structure according to the invention as prepared on the tyre manufacturing drum;
- figure 2 shows a partial view, in cross-section, of a tyre containing the breaker structure according to the invention, in a second embodiment;
- figure 3 illustrates a partial view, in cross section, of a tyre containing the breaker structure of the invention in a third embodiment;
- figure 4 shows, by a load-elongation diagram, the variation of the modulus of elasticity that happens after the moulding and vulcanizing process in the High Elongation cords usually employed in the known breaker structure;
- figure 5 illustrates the variation of the modulus of elasticity (load-elongation diagram) followed to the moulding and vulcanizing process of the tyre undergone by the types of cords utilized in realizing the structure according to the invention.

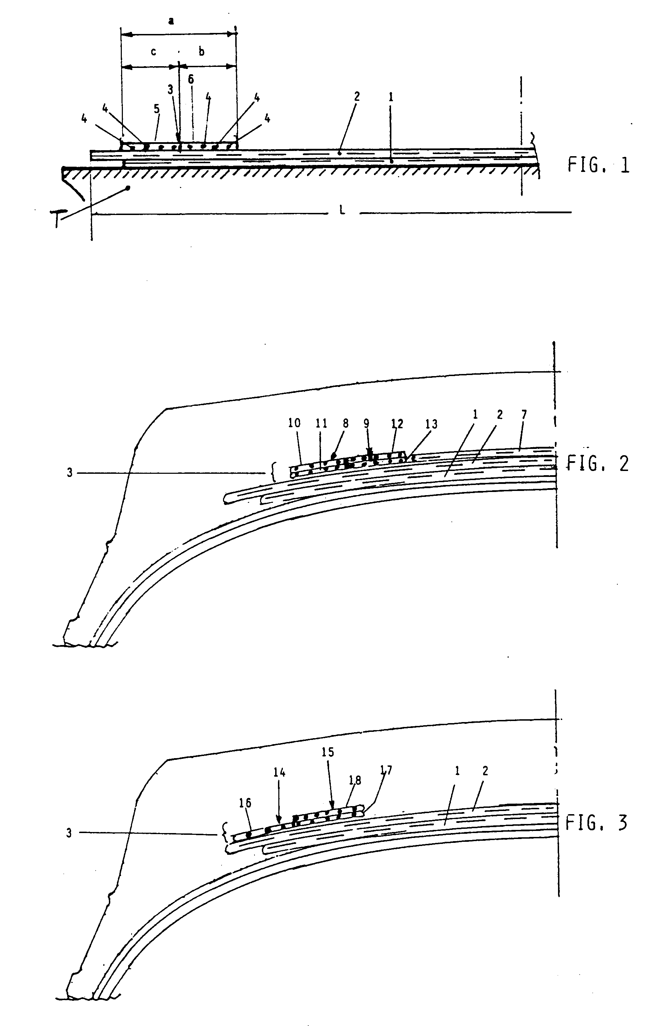

Figure 1 illustrates the breaker structure according to the invention in a first embodiment, at the end of the phase of assembling and preparation on the building drum T, this drum having a well-known cilindrical shape, which allows the flat building-up of the breaker structure.

Then, the breaker structure is composed (radially proceeding from the inside to the outside) of a first layer 1 of metallic, low-elongation cords (elongation at break comprised between 2,6% and 3,2%) parallelly disposed one another inside the layer and inclined according to an angle comprised between 10° and 30° in respect to the circumferential direction of the breaker structure.

Over this first layer there is a second layer 2, absolutely equal to the previous one and, on the other hand, with the reinforcing cords crossed in respect to the cords of the adjacent layer and symmetrically inclined in respect to the circumferential direction of the structure; all this is obviously done following a process well-known to the technicians: the width of this second layer can be greater, as per the version shown in the figure, equal or smaller than that of the underlying layer. Nevertheless, it was found to be particularly convenient that the extremities of the two ovelapped layers are graduate one another (from 5 to 10 mm approximately) in order to avoid a strong unevenness of mechanical characteristics in the finished tyre in correspondence of the breaker extremity.

In a radially, outer position in respect to the cited couple of layers, in correspondence of each extremity, it is foreseen a reinforcing ring 3 comprising at least a strip of rubberized fabric reinforced with cords 4 disposed according to the circumferential direction of the breaker structure and, however, of the tyre, that is oriented according to the usual definition, at 0°.

The above mentioned strip comprises two bands 5 and 6, axially flanked, which differ one another due to the type adopted of the reinforcing cords and, thus, substantially, dividing the totality of the 0° cords utilized in the strip in two distinct groups, respectively a first group, precisely that of band 5, situated in axially outer position in respect of the breaker and a second group, that belonging of band 6, in axially inner position.

It was found to be particularly convenient to employ in the first group the well-known metallic cords having high elongation, that is the so-called HE cords which present an elongation at break of a value comprised between 4,0% and 8,0%.

In this type of cords the elongation is due to the fact that the cords have the structure of lang lay type and precisely the single wires in the strands and the strands in the cords are all twisted in the same direction so that the cord can be thought and, in fact, its behaviour is almost like to that of the helicoidal spring. Under the effect of a tensile axial load, initially the cord supports a strong elongation, thus demonstrating a low modulus; subsequently, when the spring is stretched, the cord produces a strong tensile resistance, comparable to that of the usual metallic cords having high modulus.

According to what now illustrated, the load-elongation diagram of the high-elongation cords presents a characteristic "bend"; in other words, the above mentioned diagram presents an initial length, almost rectilinear, having low inclination, which produces strong elongations connected to low values of the load, followed by a final length, nearly rectilinear and with a strong inclination, producing - on the contrary - low elongation for strong increases of the load.

The continuous, curvilineal length, having variable inclination of connection between the initial and the final length, takes the name of "bend"; after what said above, it can be easily understood how the elongation of the cords and, however, the bend position, can be governed within certain limits, varying the winding characteristics (number of torsions per decimetre) both of wires and strands in the above mentioned High-Elongation cords of lang lay type.

In relation to the present invention, we will call HE cords those that have the middle of the bend in correspondence to an elongation around 1.6% (1.6% +/- 0.3).

The very high elongation cords will be called VHE cords which are those presenting the bend of the load-elongation diagram considerably near to higher elongation values, substantially at an elongation around 3% (3.0% +/- 0.5).

It was found to be particularly convenient in the breaker structure according to the invention, for the cords of the second group, that is those belonging to the band 6, the employ of the above mentioned VHE cords.

An alternative solution to the employ of the VHE cords is conveniently offered by the mixed, textile cords comprising yarns in Aromatic/Polyamide (Aramide) and Aliphatic/Polyamide (nylon), said cords being generally and hereinafter defined Hybrid, having a modulus from 3000 to 7000 N (Newton - measured under elongations from 1% to 2%).

In a preferred embodiment according to the present invention, the above mentioned Hybrid cord is constituted by three yarns of mono-filaments winded together with a torsion in opposite direction to that of the winding of the mono-filaments in each yarn.

More precisely, the cord is constituted by two yarns in Aramide and one in nylon: each yarn is between 1000 and 6000 denier and the torsions in the finished cord are combined together so that the yarns in Aramide present a remaining torsion not exceeding 0.5 turns per inch whereas the yarn in nylon presents a remaining torsion of opposite direction, not smaller than 1.5 turns per inch.

Such a Hybrid cord, which has an its own modulus, in the initial part of the diagram, larger than that of the previously cited HE metallic cords, after the rubberizing and vulcanizing process, appears, on the contrary, to have a modulus even smaller than that of the metallic cords having very high elongation, already mentioned, too.

Finally, according to a further embodiment of the invention, the cords of the first group (band 5) can be VHE cords on condition that the cords of the second group (band 6) are Hybrid cords.

It appears evident that the proposed couplings satisfy the essential characteristic of the invention and precisely they realize a structure wherein the modulus of elasticity of the single cords of the vulcanized tyre is non-increasing passing from the axially outer edge to that axially inner of the strip or, better, of the reinforcing ring.

On this subject, we will give hereinafter further details.

Now, it is convenient to put in evidence that the width "a" of the ring is comprised between 7% and 40% of the width L of the entire breaker structure and, on the other hand, in a per se known way. Nevertheless, in the ambit of such a width "a" is better than the width "c" of the band 5 (first group of cords) is comprised between 30% and 70% of the width of the ring.

In fact, lesser widths would not give a satisfactory result as far as breakering is concerned on the extremities of the lower layers whereas larger widths would negatively affect the driving characteristics of the tyre.

The figures 2 and 3 show the cross-section of the vulcanized tyres comprising the breaker structure according to the invention taking into consideration other two embodiment variations of the above mentioned structure.

The structure utilized for the tyre shown at figure 2, in addition to the cited layers 1 and 2 comprised a further layer 7, equal to the previous ones, in radially outer position between the two rings 3 disposed at the extremities.

Such a layer has not any whatsoever connection with the invention but solely shows that the structure can be obviously modified varying the number and reciprocal position of the layers according to any known shape, that the technician skilled in the field deems suitable.

On the other hand, as to the ring 3, this appears suitably constituted by two strips 8 and 9 radially overlapped, each constituted by two flanked bands, respectively 10,12 and 11,13.

It is absolutely obvious that the cords of the first group will be those of the bands 10 and 11 and, likewise those of the second group will be those of the respective overlapped bands 12 and 13.

Now, taking into consideration the figure 3, the ring 3 is still constituted by two radially overlapped strips 14 and 15 but, whereas the strip 14 is constituted by two flanked bands 16 and 17, the strip 15 is constituted by only one band 18; in the case taken into consideration, this band is put in correspondence of the underlying band 17 but applicable also in correspondence of the band 16.

Obviously, the position of the band in respect to the underlying bands determines the type of the reinforcing cords to be used in the band, said cords of the first group being always and only those axially outer position.

However, the width of said band 18, that is that of the band in radially, outer position, is not so rigidly connected to the width of the corresponding band in radially inner position so that, provided that the other bounding conditions of the invention are observed, the band 18 (upper) can also slightly protrude more (as illustrated) or less in respect to the width of the corresponding band 17 (lower).

In conclusion, at figure 3 is given the version of a tyre having the reinforcing ring 3 with the axially outer edge coinciding with the corresponding axially outer edge of the layer 2, that is the largest among the underlying layers. Also in this case different positionings of the ring 3 are possible in respect to the edge of the underlying layers, being, however, the preferred solution that foresees a reciprocal global graduation among the edges in correspondence both of layers and strips of the ring, as illustrated at figure 2.

As already mentioned, the main characteristic of the invention is referred to the fact that in the vulcanized tyre the modulus of elasticity of the cords must be non-increasing, that passes axially from a cords to another, moving from the axially outer edge to that inside of the strip.

To better understand this point must be considered, first of all, the fact that the breaker, as already said and shown, is manufactured by a flat process (see figure 1) then being swelled, that is shaped according to a curvilineal profile during the assembling on the raw carcass.

Moreover, the moulding phase of the tyre, that precedes the vulcanization process, being executed by the inflation of the carcass using fluid under pressure, ulteriourly expands the crown of the tyre and, often, procuring a further increase of the curvature, so that the breaker must undergo a "pull" of approximately 1,2% in correspondence of the axially inner edge of the ring 3 and pratically null on its axially outer edge.

In conclusion, the 0° cords of the strips face the vulcanizing process in different conditions, pratically equal to that of the deposition of the drum as to the cords axially outermost, already stretched with a considerable entity, for those axially innermost.

This difference of pull between the various cords of the strip by the manufacturing process of the breakers on the flat drum is, on principle, non-cancellable. It could be eliminated only by a helicoidal deposition of the cord, coil by coil, with a continuous axial movement, on the already shaped carcass.

This second system, however, cannot be competitive - due to reasons of cost - with the flat manufacturing process, which is done utilizing bands and strips of cords already arranged, so that the manufacturing breaker system on the cylindric drum must be considered a preliminary, essential condition of the procedure and, on the other hand, it appears to be responsable of the already cited drawbacks which are now satisfactorily resolved by the structure of the invention.

In fact, the Applicant has discovered with surprise that the cords acting in the vulcanized tyre, to not maintain the modulus which provided them before rubberizing and vulcanizing process. In other words, the vulcanizing phase forbides the respective movements of the single metallic wires of the cord, which - in the uncovered cord or, in any case, non-vulcanized - allows stretchings of the cord which are exclusively connected to the variation of the geometrical shape of the cord (the reference is made to the load-elongation diagram: they are represented in the initial length, preceeding the bend) conferring to the cord its high stretching.

On the contrary, in the textile cords the block of the movements relative to the single threads has globally non-considerable effects, however, in the Hybrid cords comprising yarns in heat-shrinkable material (Polyamide) the final modulus of the cord appears largely affected by the reaction of the cord material during the vulcanizing process.

In conclusion, the vulcanizing phase confer to the cords utilized in the breaker of the invention, a modulus of elasticity different from that of the initial phase, and whose value depends from the "hystory" of the cord, that is by its own initial shape, by the pull undergone, and by the effects both of moulding and vulcanizing.

Consequently, it appears evident that the cords situated on the axially outer edge of the reinforcing ring, having had a hystory different from those situated on the axially inner edge, will have a modulus rather different than that of the last ones.

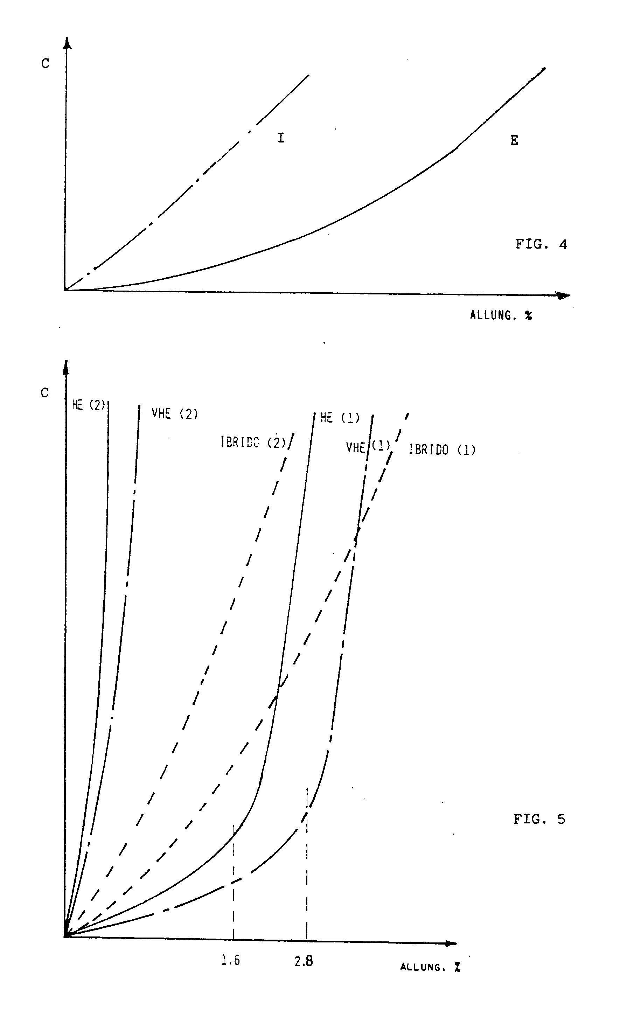

The Applicant has experimentally verified this her own intuition and the relative results are qualitatively illustrated at figure 4, which shows the load-elongation diagram for HE cords, exactly alike, taken from the vulcanized tire, respectively on the axially outer edge (E) and on the axially inner edge (I) of said reinforcing ring.

It is promptly noted that the cords on the inner edge have a considerably lesser stretching than those on the outer edge and this fact explains now a certain type of failings otherwise inexplicable which occurred sometimes in known tyres, for instance the low uniformity of the breaker structure, superficial bents in correspondence of the inner edge of the reinforcing ring, corrugated wires and, in any case, not much stretched in correspondence of the breaker extremity, with the consequent, insufficient breaking of the edges of layers of inclined cords.

Thus, it appears evident that, to achieve a global satisfactory behaviour of the tyre, the situation of the modulus of the cords in the strips must be exactly opposed to that represented in the diagram at figure 4: in other words it is necessary to have axially high modulus on the outer edge of the ring (low stretching-high breaking result) and modulus having values progressively decreasing (increasing elongatons) towards the axially inner edge.

It is evident that it will not be possible to have strips comprising such cords, in the vulcanized tyre, having each cord an its own modulus perfectly suitable to the position of the cord in the strip; nevertheless, a very satisfactory solution is that already obtained in the structure of the invention by the employ of the two types of the cords, one type per group, so that to have in the vulcanized tyre two different modulus level of the cords, being the value of said modulus approximately even in each group but of value rather different in the two groups; such a result is perfectly achievable utilizing the types of cords illustrated in the present description, obviously according to the suggested couplings.

At figure 5 are qualitatively illustrated the loading elongation diagrams for the type of cords proposed in the present description, examining for each type of cord (HE,VHE,HYBRID) the modulus trend before the vulcanizing (situation 1) and after the vulcanizing (situation 2) being all the vulcanized cords taken from the same point of the breaker structure or, better, of the reinforcing ring.

It was found how the vulcanizing process completely cancels the bend of the cords HE and VHE conferring them a modulus higher than that of the Hybrid cord; the obvious consequence of this is the overturning of the initial situation.

In connection with what illustrated till now, figure 5 justifies at full the efficiency of the already cited solutions HE-VHE, HE-HYBRID, VHE-HYBRID; however, in the last of these, it must put in evidence that the breakering effect on the extremities of the radially inner layers of inclined cords will be, in any case, of lesser value than that achievable by the solution that foresees the cords HE in axially outer position, for which the convenience of the above mentioned solution VHE-HYBRID will have to be assessed case by case also in connection with the other characteristics of the tyre, here not considered. It is also clear that in axially outer position, exclusively metallic cords will have to be positioned and, precisely, of type HE or VHE as the textile cords, as known, do not guarantee any whatsoever resistance to compression stresses, particularly important as to the tyres object of the invention, when they run on curvilineal route or on drift.

The tyre object of the invention has demonstrated to be able to satisfactorily resolve the problem faced: in fact, the disposition of the 0° cords, according to a non-growing trend (that is: constant or in decrease) of the values of the modulus has allowed to eliminate a few defects previously cited and to separate the characteristics of chilometrical yield by the requirement of a flattening of the contact area of the tyre, allowing, on the contrary, to maintain a swelling value of the tread-band which emphasizes the comportamental gifts of the tyre during working and to furtherly increase, although the cited swelling, the wear regularity characteristics and of slow abradibility of the tread-band.

It appears evident that the present description is given only by way of non-limiting example and it is not restricted to the illustrated embodiments of the present patent but refers to all the alternative embodiments and/or modifications which will be apparent to a technician skilled in this field.

## Claims

1. Tyre for vehicle-wheels comprising a carcass of radial type, a tread-band upon such carcass and a breaker structure inserted between the tread-band and the carcass, said breaker structure comprising at least two layers (1,2) of metallic fabric radially overlapped, having a width substantially like that of the tread-band, reinforced by cords having an elongation at break comprised between 2,6% and 3,2%, said cords being parallelly disposed together in each layer and crossed with those at the opposite layer, symmetrically inclined in respect to the longitudinal direction of the tyre, according to an angle comprised between 10° and 30°, and a couple of reinforcing rings (3), being each ring disposed at one extremity of said breaker structure, in radially outer position in respect to said couple of layers (1,2), of width comprised between 7% and 40% of the axial width of said breaker structure, each ring (3) comprising at least a strip of rubberized fabric reinforced with cords (4) disposed according to the circumferential direction of the tyre, having an elongation at break of value higher than those of the reinforcing cords of said layers radially innermost, characterized by the fact that in the vulcanized tyre said strip reinforcing cords (4) have at least two distinct values of modulus of elongation, whereby the cords having a greater modulus of elongation are disposed in the axially outermost portion of said strips such that the modulus of elongation of said reinforcing cords does not increase when proceeding axially from the outside towards the inside of said strips.

2. Tyre according to claim 1 characterized by the fact that said strips 3 comprise two groups (5,6) of reinforcing cords, the modulus of elongation of said cords being approximately equal one another in each group and substantially different from those of the flanked group.

3. Tyre according to claim 2, characterized by the fact that the cords of the axially outer group (5) are high-elongation, lang lay type, metallic cords.

4. Tyre according to claim 2 characterized by the fact that the cords of the axially inner group (6) are metallic cords of very high elongation type.

5. Tyre according to claim 2 characterized by the fact that the cords of the axially inner group (6) are Hybrid textile cords comprising Aramide and Polyamide yarns.

6. Tyre according to claim 5, characterized by the fact that the above mentioned cords comprise two yarns in Aramide and one yarn in Polyamide helicoidally wound in one another, said Aramide yarns presenting a residual torsion in the finished cord not exceeding 0,5 turns per inch, said Polyamide yarn presenting a residual torsion, with opposed direction to that of Aramide yarns, not lesser to 1,5 turns per inch.

7. Tyre according to claim 2, characterized by the fact that the axial width of the axially outer group (5) of cords is comprised between 30% and 70% of the outer width of the strip.

8. Tyre according to claim 1 characterized by the fact that each ring (3) comprises at least two radially overlapped strips.

9. Tyre according to claim 2 characterized by the fact that the cords of at least a group are distributed in a plurality of bands (10,11; 12,13) radially overlapped.

10. Tyre according to claim 1 characterized by the fact that the axially outer edge of said strips coincide with the axially outer edge of the narrower one between the two layers (1,2) in radially inner position.

**Revendications**

1. Pneumatique pour véhicule à roues, comprenant une carcasse du type radial, une bande de roulement sur ladite carcasse et une structure de nappe de renforcement de la bande de roulement, insérée entre celle-ci et la carcasse, ladite structure de renforcement de la bande de roulement comprenant au moins deux nappes (1,2) d'un tissu métallique, à recouvrement radial, ayant une largeur à peu près analogue à celle de la bande de roulement, renforcées par des câblés ayant un allongement à la rupture compris entre 2,6% et 3,2%, ces câblés étant disposés parallèlement les uns aux autres dans chaque nappe et croisés avec ceux de la nappe opposée, inclinés symétriquement par rapport à la direction longitudinale du pneumatique, suivant un angle compris entre 10° et 30°, et deux couronnes de renforcement (3), chaque couronne étant disposée à une extrémité de ladite structure de nappe de renforcement de la bande de roulement, dans une position radialement externe par rapport auxdites nappes (1,2), ayant une largeur comprise entre 7% et 40% de la largeur axiale de ladite structure de la nappe de renforcement de la bande de roulement, chaque couronne (3) comprenant au moins une bande d'un tissu caoutchouté renforcé de câblés (4) disposés suivant la direction circonférentielle du pneumatique, ayant un allongement à la rupture d'une valeur supérieure à celle des câblés de renforcement desdites nappes radialement les plus internes, caractérisé par le fait que, dans le pneumatique vulcanisé, ladite bande de câblé de renforcement (4) présente au moins deux valeurs distinctes de modules d'allongement, de manière que les câblés ayant un module d'allongement plus grand sont disposés dans la partie axialement la plus externe desdites bandes de sorte que le module d'allongement desdits câblés de renforcement n'augmente pas en direction axiale depuis l'extérieur vers l'intérieur de ladite bande.

2. Pneumatique suivant la revendication 1, caractérisé en ce que lesdites bandes (3) comprennent deux groupes (5,6) de câblés de renforcement, les modules d'allongement desdits câblés étant à peu près égaux les uns aux autres dans chaque groupe, et notablement différents de ceux du groupe disposé latéralement.

3. Pneumatique suivant la revendication 2, caractérisé en ce que les câblés du groupe axialement externe (5) sont des câblés métalliques à allongement élevé du type à torsion Lang.

4. Pneumatique suivant la revendication 2, caractérisé en ce que les câblés du groupe axialement interne (6) sont des câblés métalliques du type à très haut allongement.

5. Pneumatique suivant la revendication 2, caractérisé en ce que les câblés du groupe axialement interne (6) sont des câblés textiles Hybrides comprenant des fils aramides et polyamides.

6. Pneumatique suivant la revendication 5, caractérisé en ce que les câblés précités comprennent deux fils d'aramide et un fil de polyamide, enroulés hélicoïdalement les uns dans les autres, les fils aramides présentant une torsion résiduelle dans le câblé fini qui n'excède pas 0,5 spires par unité de longueur de 2,54 cm, lesdits fils polyamides présentant une torsion résiduelle en sens opposé de celle des fils aramides, qui n'est pas inférieure à 1,5 spires par unité de longueur de 2,54 cm.

7. Pneumatique suivant la revendication 2, caractérisé en ce que la largeur axiale du groupe axialement externe (5) de câblés est comprise entre 30% et 70% de la largeur totale de la bande.

8. Pneumatique suivant la revendication 1, caractérisé en ce que chaque couronne (3) comprend au moins deux bandes qui se recouvrent radialement.

9. Pneumatique suivant la revendication 2, caractérisé en ce que les câblés d'au moins un groupe sont répartis dans plusieurs rubans (10,11; 12,13), se recouvrant radialement.

10. Pneumatique suivant la revendication 1, caractérisé en ce que le bord axialement externe desdites bandes coincide avec le bord axialement externe de la plus étroite des deux nappes (1,2) dans la position radialement interne.

**Patentansprüche**

1. Reifen für Fahrzeugräder, umfassend eine Radialkarkasse, einen Laufstreifen auf der Karkasse und ein Gürtelgebilde, welches zwischen den Laufstreifen und die Karkasse eingesetzt ist, wobei das Gürtelgebilde wenigstens zwei Lagen (1,2) aus Metallschnurstoff aufweist, die radial übereinander angeordnet sind, eine Breite im wesentlichen gleich der Breite des Laufstreifens haben und durch Schnüre verstärkt sind, die eine Bruchdehnung zwischen 2,6 % und 3,2 % haben, die Schnüre in jeder Lage parallel zueinander angeordnet sind und die Schnüre der gegenüberliegenden Lage kreuzen sowie mit Bezug auf die Längsrichtung des Reifens symmetrisch schräg verlaufen in einem Winkel zwischen 10° und 30°, und ein Paar von Verstärkungsringen (3), wobei jeder Ring an einem Ende des Gürtelgebildes radial außerhalb des genannten Paares von Lagen (1,2) angeordnet ist und eine Breite zwischen 7% und 40 % der axialen Breite des Gürtelgebildes hat, und wobei jeder Ring (3) wenigstens einen Streifen aus verkautschuktem Stoff aufweist, der mit Schnüren (4) verstärkt ist, die in Umfangsrichtung des Reifens angeordnet sind und deren Bruchdehnung einen Wert hat, der höher als der Wert der Bruchdehnung der Verstärkungsschnüre der radial innersten Lagen ist,
dadurch **gekennzeichnet,**
daß in dem vulkanisierten Reifen die Verstärkungsschnüre (4) des Streifens wenigstens zwei unterschiedliche Werte des Dehnungsmoduls haben, wobei die Schnüre, die den größeren Dehnungsmodul haben, in dem axial äußersten Teil der Streifen derart angeordnet sind, daß der Dehnungsmodul der Verstärkungsschnüre sich nicht erhöht, wenn von der Außenseite axial in Richtung gegen die Innenseite des Streifens fortgeschritten wird.

2. Reifen nach Anspruch 1, dadurch gekennzeichnet, daß die Streifen (3) zwei Gruppen (5,6) von Verstärkungsschnüren aufweisen, wobei der Dehnungsmodul der Schnüre in jeder Gruppe annähernd einander gleich und im wesentlichen verschieden von dem der Schnüre der flankierenden Gruppe ist.

3. Reifen nach Anspruch 2, dadurch gekennzeichnet, daß die Schnüre der axial äußeren Gruppe (5) Längs- bzw. Gleichschlag-Metallschnüre hoher Dehnung sind.

4. Reifen nach Anspruch 2, dadurch gekennzeichnet, daß die Schnüre der axial inneren Gruppe (6) Metallschnüre mit sehr hoher Dehnung sind.

5. Reifen nach Anspruch 2, dadurch gekennzeichnet, daß die Schnüre der axial inneren Gruppe (6) Hybrid-Textilschnüre sind, die Aramid- und Polyamidgarne umfassen.

6. Reifen nach Anspruch 5, dadurch gekennzeichnet, daß die genannten Schnüre zwei Garne aus Aramid und ein Polyamidgarn umfassen, die schraubenförmig ineinandergewickelt sind, wobei die Aramidgarne eine Resttorsion in der fertiggestellten Schnur, die 0,5 Drehungen je Zoll nicht überschreitet, haben und das Polyamidgarn eine Restdrehung mit gegenüber derjenigen der Aramidgarne entgegengesetzer Richtung von nicht weniger als 1,5 Drehungen je Zoll hat.

7. Reifen nach Anspruch 2, dadurch gekennzeichnet, daß die axiale Breite der axial äußeren Gruppe (5) von Schnüren zwischen 30 % und 70 % der Gesamtbreite des Streifens liegt.

8. Reifen nach Anspruch 1, dadurch gekennzeichnet, daß jeder Ring (3) wenigstens zwei radial übereinanderliegende Streifen aufweist.

9. Reifen nach Anspruch 2, dadurch gekennzeichnet, daß die Schnüre wenigstens einer Gruppe in einer Mehrzahl von Bändern (10,11;12,13) verteilt sind, die einander radial überlappen.

10. Reifen nach Anspruch 1, dadurch gekennzeichnet, daß die axial äußere Kante der Streifen mit der axial äußeren Kante der schmaleren der beiden Lagen (1,2) in radial innerer Position übereinstimmt.

FIG. 1

FIG. 2

FIG. 3

C

I

E

FIG. 4

ALLUNG. %

C

HE (2)  VHE (2)  HE (1)

IBRIDO (2)  VHE (1)  IBRIDO (1)

FIG. 5

1.6  2.8

ALLUNG. %